## Europäisches Patentamt

## European Patent Office

## Office européen des brevets

(19)

(11) Veröffentlichungsnummer: **0 217 222 B1**

(12) **EUROPÄISCHE PATENTSCHRIFT**

(45) Veröffentlichungstag der Patentschrift: **15.02.89**

(51) Int. Cl.⁴: **C09K 3/14, B24D 3/06**

(21) Anmeldenummer: **86112789.2**

(22) Anmeldetag: **16.09.86**

(54) Sinterschleifkörper.

(30) Priorität: **04.10.85 DE 3535659**

(43) Veröffentlichungstag der Anmeldung:
**08.04.87 Patentblatt 87/15**

(45) Bekanntmachung des Hinweises auf die Patenterteilung:
**15.02.89 Patentblatt 89/7**

(84) Benannte Vertragsstaaten:
**AT BE CH DE FR GB IT LI SE**

(56) Entgegenhaltungen:
**DE-B- 1 298 855**
**GB-A- 1 010 506**
**US-A- 2 137 201**
**US-A- 2 833 638**

(73) Patentinhaber: **D. Swarovski & Co.,**
**Postfach 15 Swarovskistrasse 36,**
**A-6112 Wattens/Tirol(AT)**

(72) Erfinder: **Weis, Günter, Dr., Vogelweiderweg 12,**
**A-6112 Wattens(AT)**
Erfinder: **Cuel, Albert, Birkenweg 1, A-6060 Miis(AT)**

(74) Vertreter: **Kador & Partner, Corneliusstrasse 15,**
**D-8000 München 5(DE)**

## Beschreibung

Die Erfindung bezieht sich auf einen Sinterschleifkörper.

Zum Grob- und Feinschleifen von konkaven oder konvexen Flächen auf Metall-, Keramik-, Glaskörpern u.dergl. werden üblicherweise kalotten- oder halbkugelförmige Träger verwendet, auf denen zahlreiche gesinterte Schleifkörper, z.B. sog. Diamant-Pellets, befestigt werden. Nach dem Aufbringen dieser Schleifkörper auf den Träger müssen diese auf den vorgesehenen Radius abgerichtet werden. Dies ist ein aufwendiger Arbeitsgang.

Will man dieselben Schleifkörper zum Schleifen mit anderem Radius verwenden, muß man sie vom Träger ablösen, auf einen anderen aufbringen und erneut zeitaufwendig und unter Materialverlust abrichten. Für viele Zwecke wäre es daher wünschenswert, Sinterschleifkörper einzusetzen, welche sich von vornherein einer gekrümmten Fläche anpassen können und daher nur ein Minimum an Abrichtung erfordern.

Der Erfindung liegt die Aufgabe zu Grunde, Sinterschleifkörper zu schaffen, die sich auf Grund ihrer Biegsamkeit gekrümmten Flächen angleichen können und bei denen die Nachteile herkömmlicher Schleifkörper vermieden werden.

Diese Aufgabe wird durch einen Sinterschleifkörper auf der Basis einer Bronzelegierung mit teilchenförmigem Schleifkorn gelöst, der einen Gehalt, bezogen auf die Legierung von

3 bis 30 Gew.-% Ag,

0 bis 1 Gew.-% Si und

0,05 bis 3 Gew.-% Ge, Sn, Pb, Zn und/oder Cd und der Rest Kupfer, aufweist.

Der Kupfergehalt der Legierung beträgt zwischen 70 und 98 Gew.-%, vorzugsweise 85 bis 95 Gew.% und insbesondere 90 bis 95 Gew.-%.

Der Silbergehalt liegt zwischen 3 und 30 Gew.-%, vorzugsweise bei 5 bis 10 Gew.-% und insbesondere bei 4 bis 6 Gew.-%.

Silizium kann in einer Menge von bis zu 1 Gew.-% vorliegen. Bevorzugt werden 0,1 bis 0,5 und insbesondere 0,2 bis 0,4 Gew.-% Si.

Die Metalle Ge, Sn, Pb, Zn und/oder Cadmium liegen in einer Menge von 0,05 bis 3 Gew.-%, vorzugsweise 0,2 bis 1,0 und insbesondere 0,2 bis 0,6 Gew.-% vor. Zink und/oder Cadmium werden als Legierungszusätze bevorzugt.

Überraschenderweise haben Schleifkörper der vorgenannten Zusammensetzung die Eigenschaft, biegsam und verformbar zu sein, so daß sie gekrümmten Flächen angepaßt werden können. Es wird damit eine völlig neue Generation von Schleifkörpern zum Schleifen von gekrümmten Flächen geschaffen.

Die Anpassung dieser Schleifkörper an gekrümmte Flächen wird nicht durch mechanische, galvanische oder thermische Bearbeitung erreicht, sondern beruht auf ihrer Biegsamkeit. Sofern ein solcher biegsamer Schleifkörper reversibel, z.B. mittels Lot, Schmelzkleber oder anderem lösbaren Kleber oder auch mechanisch auf seinem Träger befestigt wird, kann er abgelöst und wieder auf einer anders gekrümmten Fläche befestigt werden. Man kann also mit den erfindungsgemäßen Schleifkörpern ohne größeren Aufwand und ohne Substanzverlust nacheinander verschieden gekrümmte Träger belegen. Das Belegen gekrümmter Flächen erfolgt meist durch Anpressen der biegsamen Schleifkörper mittels geeigneter Gegenform, wobei zwischen Träger und Schleifkörper ein geeignetes Befestigungsmedium eingebracht wird. Je nach Art dieses Mediums erfolgt dieser Vorgang mit oder ohne Temperatureinwirkung. Eine gekrümmte Fläche kann entweder in einem Stück oder mit Segmenten belegt werden. Letztere dicht aneinander oder mit Kanälen dazwischen, zum besseren Spanaustrag und zum besseren Kühlmittelzutritt.

Der Sinterschleifkörper wird hergestellt, indem 70 bis 98 Gew.-% Kupfer, 3 bis 30 Gew.-% Silber, 0 bis 1 Gew.-% Si und 0,05 bis 3 Gew.-% Germanium, Zinn, Blei, Zink und/oder Cadmium in Pulverform vermischt werden, wobei zwei oder mehrere Bestandteile auch als Pulver ihrer Legierung miteinander eingesetzt werden können. Als Schleifkörner können alle bekannten Schleifkornarten eingesetzt werden. Geeignete Beispiele sind:

Diamant, Granat, Bimsstein, Tripel, Korund, Schmirgel, Kieselgur, Schleifsande, Sandsteine, Boride, Carbide, insbesondere Bor-, Wolfram-, Titan-, Niob-, Tantal-, Zirkon-, Molybdän-, Chrom- und Siliciumcarbid, Nitride, z.B. Bornitrid, Oxide, insbesondere Aluminium-, Silicium-, Titan-, Zirkon- und Ceriumoxid und Carbonitride. Die Schleifkörner können in üblicher Körnung zum Einsatz kommen.

Das Schleifkorn kann in einem Volumenanteil von 1 bis 50%, vorzugsweise 5 bis 30% und insbesondere bis 25% vorliegen. Der Gewichtsanteil kann bei Diamant beispielsweise zwischen 0,1 und 1,8 g/cm³ und vorzugsweise zwischen 0,2 und 0,9 g/cm³ liegen. Auch andere Schleifkörner können in den genannten Gewichtsanteilen verwendet werden. Grundsätzlich kommen Schleifkornkonzentrationen zwischen C 25 und C 200, in besonderen Fällen auch darüber, in Betracht.

Weiterhin können der Mischung noch Hilfsmittel zugesetzt werden, die die Preßbarkeit und Rieselfähigkeit der Mischung verbessern.

Diese pulverförmige Mischung wird vorgepreßt und gesintert. Das Sintern erfolgt bei einer Temperatur von 500 bis 600°C in einer Heißsinterpresse unter einem Druck von 80 bis 400 kp/cm².

Daran schließt sich vorzugsweise eine thermische Nachbehandlung im Ofen an. Die Nachbehandlung erfolgt während 1 bis 4 Stunden bei 750 bis 900°C. Sie kann in einem einfachen Tempern bei konstanter Temperatur bestehen.

Der Erfindung wird nachstehend an Hand eines Beispiels erläutert.

<u>Beispiel</u>

Einer Bronzelegierung mit einem Gehalt von 93,58 Gew.-% Cu,

5,78 Gew.-% Ag,

0,24 Gew.-% Si und

0,4 Gew.-% Zn

wurde in Pulverform vermischt. Dieser Mischung wurden teilchenförmige Diamanten in einer Menge von 0,4 g/cm³ zugesetzt. Danach wurde die Mischung vorgepreßt und anschließend gesintert.

Der Sinterprozeß wurde bei einer Temperatur von 580°C in einer Heißsinterpresse unter einem Druck von 200 kp/cm² durchgeführt.

Anschließend erfolgte eine thermische Nachbehandlung in zwei Stufen.

(1) 1 h bei 580°C,
(2) 1 h bei 750°C.

Danach ließ man den Sinterschleifkörper langsam auskühlen.

Der so erhaltene Sinterschleifkörper war biegsam, anformbar und plastisch verformbar.

## Patentansprüche

1. Sinterschleifkörper auf der Basis einer Bronzelegierung mit teilchenförmigem Schleifkorn, gekennzeichnet durch einen Gehalt, bezogen auf die Legierung, von
3 bis 30 Gew.-% Ag,
0 bis 1 Gew.-% Si,
0,05 bis 3 Gew.-% Ge, Sn, Pb, Zn und/oder Cd und der Rest Kupfer.

2. Sinterschleifkörper nach Anspruch 1, gekennzeichnet durch einen Gehalt, bezogen auf die Legierung, von
5 bis 10 Gew.-% Ag,
0,1 bis 0,5 Gew.-% Si,
0,2 bis 1,0 Gew.-% Ge, Sn, Pb, Zn und/oder Cd und der Rest Kupfer.

3. Sinterschleifkörper nach Anspruch 1 oder 2, gekennzeichnet durch einen Gehalt, bezogen auf die Legierung, von
4 bis 6 Gew.-% Ag,
0,2 bis 0,4 Gew.-% Si,
0,2 bis 0,6 Gew.-% Zn und/oder Cd und der Rest Kupfer.

4. Sinterschleifkörper nach einem der Ansprüche 1 bis 3, dadurch gekennzeichnet, daß der Sinterschleifkörper 0,15 bis 2,00 g/cm³ Schleifkorn enthält.

## Claims

1. A sintered abrasive means on the basis of a bronze alloy with particulate abrasive grain, characterized by a content, relative to the alloy, of
3 to 30 wt.% of Ag,
0 to 1 wt.% of Si,
0.05 to 3 wt.% of Ge, Sn, Pb, Zn and/or Cd, the remainder being copper.

2. The sintered abrasive means according to claim 1, characterized by a content, relative to the alloy, of
5 to 10 wt.% of Ag,
0.1 to 0.5 wt.% of Si,
0.2 to 1.0 wt.% of Ge, Sn, Pb, Zn and/or Cd, the remainder being copper.

3. The sintered abrasive means according to claim 1 or 2, characterized by a content, relative to the alloy, of
4 to 6 wt.% of Ag,
0.2 to 0.4 wt.% of Si,
0.2 to 0.6 wt.% of Zn and/or Cd, the remainder being copper.

4. The sintered abrasive means according to any of claims 1 to 3, characterized in that the sintered abrasive means contains 0.15 to 2.00 g/cm³ of abrasive grain.

## Revendications

1. Corps à abrasif fritté sur la base d'un allliage de bronze avec grain abrasif sous forme de particules, caractérisé par une teneur, rapportée à l'alliage, de
3 à 30% en poids Ag,
0 à 1% en poids Si,
0,05 à 3% en poids Ge, Sn, Pb, Zn et/ou Cd et le reste cuivre.

2. Corps à abrasif fritté selon la revendication 1, caractérisé par une teneur, rapportée à l'alliage, de
5 à 10% en poids Ag,
0,1 à 0,5% Si,
0,2 à 1,0% en poids Ge, Sn, Pb, Zn et/ou Cd et le reste cuivre.

3. Corps à abrasif fritté selon la revendication 1 ou 2, caractérisé par une teneur, rapportée à l'alliage, de
4 à 6% en poids Ag,
0,2 à 0,4% en poids Si,
0,2 à 0,6% en poids Zn et/ou Cd et le reste cuivre.

4. Corps à abrasif fritté selon l'une des revendications 1 à 3, caractérisé en ce que le corps à abrasif fritté contient 0,15 à 2,00 g/cm³ de grain abrasif.